# EUROPEAN PATENT APPLICATION

(11) **EP 3 199 482 A1**
(43) Date of publication of application: **02.08.2017**
(21) Application number: 16153630.5
(22) Date of filing: 01.02.2016
(51) Int. Cl.: B66B 7/08

(54) **ROPE TERMINAL DEVICE, ROPE TERMINAL ARRANGEMENT AND ELEVATOR**

(71) Applicant: Kone Corporation, 00330 Helsinki (FI)
(72) Inventor: Helenius, Juha, 00330 Helsinki (FI)
(74) Representative: Kolster Oy Ab

(57) **Abstract**

The invention relates to a rope terminal device (1) for fixing rope ends (E) of ropes (R) of an elevator, comprising a rope terminal body (B) comprising one or more cavities (C) for accommodating one or more rope ends (E); one or more fixing members (2,3) for fixing the one or more rope ends (E) immovably into the one or more cavities (C); wherein the rope terminal body (B) is a metallic block surrounding said one or more cavities (C), and weighs more than 200 kg, the rope terminal body (B) providing thermal mass around the one or more rope cavities (C) for delaying heat transfer from the exterior to the rope ends (E) contained in the one or more cavities (C). The invention relates to a rope terminal arrangement (A) and an elevator implementing said rope terminal device (1).

## Description

### FIELD OF THE INVENTION

The invention relates to a rope terminal device of an elevator, a rope terminal arrangement of an elevator and an elevator. Said elevator is preferably an elevator for vertically transporting passengers and/or goods.

### BACKGROUND OF THE INVENTION

In elevators, one or more ropes are used as the means by which the load to be hoisted is suspended. Each rope end needs to be fixed to a fixing base, which is typically either the load to be lifted or a stationary structure, depending on the type of suspension chosen for the elevator. The rope ends can be fixed directly to the load, such as the car or counterweight, which is the case when these are to be suspended with 1:1 ratio. Alternatively, the rope ends can be fixed to a stationary structure of the building, which is the case when the car and counterweight are to be suspended with 2:1 ratio, for instance.

Ropes of an elevator ropes are normally either belt-shaped or round in cross section. Each elevator rope typically includes one or more load bearing members that are elongated in the longitudinal direction of the rope, each forming a structure that continues unbroken throughout the length of the rope. Load bearing members are the members of the rope which are able to bear together the load exerted on the rope in its longitudinal direction. The load, such as a weight suspended by the rope, causes tension on the load bearing member, which tension can be transmitted by the load bearing member in question all the way from one end of the rope to the other end of the rope. Ropes may further comprise non-bearing components, such as a coating, which cannot transmit tension in the above described way. The coating can be utilized for protection of the load bearing members and/or facilitating contact with rope wheels and/or for positioning adjacent load bearing members relative to each other, for example. Belt-shaped ropes can have only one of said load bearing members but often they include several of said load bearing members positioned by the coating adjacent each other in width direction of the rope.

In prior art, elevator ropes have been fixed to the fixing base by a rope terminal device provided with fixing members arranged to grip the rope. Reliability of this sort of arrangement relies largely on the grip produced by the fixing members and the rope surface. The rope end should be firmly gripped such that it is not able to slide relative to the fixing member, because this would mean that the suspension of the particular rope would be lost. Therefore, for facilitating safety, it is advantageous to ensure good grip.

The load bearing members and/or the coating of a rope can comprise non-metallic material, such as polymer material. Due to the non-metallic material these components of the rope can damage relatively rapidly when subjected to heat e.g. in case of fire. Firmness of the grip with a coated rope depends largely on state of the rope, and in particular the coating forming the interface for the gripping. Should the coating be made of polymer material, which is sensitive to high temperature, such as thermoplastic polymer materials, it can melt and/or burn if subjected to high temperature, such as in case of fire. Also, the load bearing members may be damaged if they are made of material sensitive to high temperature, such as fiber reinforced composite comprising a matrix material sensitive to high temperature.

A drawback of the known rope terminal solutions has been that they need additional special provisions for protecting them from being damaged in high temperature conditions.

Different rope terminal devices have been proposed in prior art, for example in US2014/0182975A1, EP2020399A1, WO0040497A1 and EP2311768A1.

### BRIEF DESCRIPTION OF THE INVENTION

The object of the invention is to introduce rope terminal device of an elevator, a rope terminal arrangement of an elevator and an elevator which are improved in terms of their ability to withstand temporary high temperature conditions. An object is to introduce a solution by which one or more of the above defined problems of prior art and/or problems discussed or implied elsewhere in the description can be solved. Embodiments are presented, inter alia, where one or more of the above objects are realized with simple overall structure and good reliability. Embodiments are presented, inter alia, which are suitable for ropes containing non-metallic parts such as non-metallic coating and/or non-metallic load bearing members.

It is brought forward a new rope terminal device for fixing rope ends of ropes of an elevator, the rope terminal device comprising a rope terminal body having inside it one or more cavities for accommodating one or more rope ends; and one or more fixing members for fixing the one or more rope ends immovably into the one or more cavities. The rope terminal body is a metallic block surrounding said one or more cavities, and weighs more than 200 kg, the rope terminal body thereby providing thermal mass around the one or more cavities for delaying heat transfer from the exterior to the rope ends contained in the one or more cavities. With this solution one or more of the above mentioned objects are achieved. In particular, a rope terminal device of an elevator is achieved, which can protect the rope ends fixed by it from overheating in temporary high temperature conditions. Preferable further details are introduced in the following, which further details can be combined with the device individually or in any combination.

It is also brought forward a new rope terminal arrangement of an elevator, comprising one or more rope ends; a rope terminal body having inside it one or more cavities accommodating one or more rope ends; one or more fixing members fixing the one or more rope ends immovably into the one or more cavities; wherein the rope terminal body is a metallic block surrounding said one or more cavities, and weighs more than 200 kg, the rope terminal body thereby providing thermal mass around the one or more cavities for delaying heat transfer from the exterior to the rope ends contained in the one or more cavities. With this solution one or more of the above mentioned objects are achieved. In particular, a rope terminal arrangement of an elevator is achieved wherein the rope ends fixed by it are protected from overheating in temporary high temperature conditions. Preferable further details are introduced in the following, which further details can be combined with the arrangement individually or in any combination.

In a preferred embodiment, each said cavity is surrounded by a metal wall 4 which is plurality of centimeters, preferably at least 5 centimeters, thick and formed by the rope terminal body.

In a preferred embodiment, each said cavity has at least said plurality of centimeters, preferably at least 5 cm, of metal material of the rope terminal body B 360 degrees around it.

In a preferred embodiment, the rope terminal body has a width, height and thickness, and majority (i.e. more than 50%) of the volume of the rope terminal body consists of metal, wherein the volume of the rope terminal body is defined as width * height * thickness of the rope terminal body. Accordingly, the rope terminal is dense which is advantageous for the effect of the thermal mass thereof. Preferably, at least 70%, more preferably at least 80 % of volume of the block consists of metal.

In a preferred embodiment, the one or more rope ends comprise non-metallic parts, such as non-metallic coating forming the outer surface of the rope end and/or one or more non-metallic load bearing members. In this context, the rope terminal device/rope terminal arrangement is particularly advantageous, because of its ability to protect the rope ends in high temperature conditions.

In a preferred embodiment, the rope terminal body forms part of a counterweight of an elevator. Preferably, the rope terminal body forms at least part of an upper cross beam of a counterweight. Preferably, the rope terminal body at least partially connects two vertical beams of the counterweight. Preferably, the counterweight has been mounted to travel along guide rails guided by guide members g mounted on the counterweight. Preferably, there are at least one guide member mounted on a first vertical beam of the counterweight and at least one second guide member mounted on a second vertical beam of the counterweight.

In a preferred embodiment, the rope terminal body weighs more than 50 kg per each rope end it is arranged to accommodate.

In a preferred embodiment, the rope terminal body weighs more than 500 kg, more preferably more than 1000 kg.

In a preferred embodiment, the body comprises one or more mouth openings through which the one or more rope ends can pass into the one or more cavities.

In a preferred embodiment, each cavity is elongated and has a longitudinal direction and the rope end is arranged to be oriented in longitudinal direction of the cavity when placed therein.

In a preferred embodiment, the rope terminal body has a width, height and thickness, each being at least 20 cm. Preferably, said width is at least 50 cm. Preferably, said height is at least 50 cm. When referring to width, height and thickness, it is referred to these when the rope terminal body is in an upright position wherein it the rope ends are to pass into the cavities in vertical direction.

In a preferred embodiment, each said cavity is tubular. Preferably, each said cavity has a tubular first portion and a tubular second portion said second portion being larger in cross section than said first section and configured to accommodate a rope end and one or more fixing members. Preferably, said first portion is at least 10 cm long, more preferably at least 20 cm long.

In a preferred embodiment, centre of gravity of the rope terminal body is at the point which is between the end face of a rope placed in the cavity and the one or more mouth openings as measured in longitudinal direction of the rope end.

In a preferred embodiment, the centre of gravity of the rope terminal body is at a distance less than 50 cm from the closest contact point between the one or more fixing members and the rope end as measured in longitudinal direction of the rope end.

In a preferred embodiment, the rope terminal body contains heat insulation material filler in one or more internal cavities and/or the block is at least partially covered with heat insulation material layer. Preferably, said heat insulation material filler and/or said heat insulation material layer is fire-proof. Said heat insulation material filler and/or said heat insulation material layer can each be in the form of heat insulation foam or heat insulation wool or heat reflector such as a foil, or an element comprising one or two or all of these. Said heat insulation material filler and/or said heat insulation material layer can comprise non-metallic heat insulation material, such as epoxy resin or calcium silicate base binder for example.

In a preferred embodiment, majority (i.e. more than 50%) of the weight of the rope terminal body is formed by metal, preferably cast metal, said cast metal preferably being cast iron.

In a preferred embodiment, the rope terminal body is a piece cast of metal or at least comprises body parts each said body part being a piece cast of metal, said metal preferably being iron.

In a preferred embodiment, said one or more fixing members are arranged/configured to be arranged to block movement of the rope end in its longitudinal direction relative to the rope terminal body.

In a preferred embodiment, said one or more fixing members are disposed in the one or more cavities.

In a preferred embodiment, said one or more fixing members are compression members that delimit a rope gap narrowable by movement of the one or more fixing members for compressing the rope end placed in the rope gap.

In a preferred embodiment, said one or more fixing members are wedge-shaped compression members disposed in the one or more cavities and configured to wedge therein against the one or more rope ends for producing compression thereon by wedging. In one kind of preferred embodiment, the cavity itself is tapered, and thereby comprises wedge face for the wedge shaped member. In one other kind of preferred embodiment, the device comprise a separate housing accommodated by the cavity, the housing comprising a tapered inside space wherein the wedge shaped member(s) are placed/can be placed.

In a preferred embodiment, each said cavity accommodates one or more wedge shaped compression members.

In a preferred embodiment, the rope terminal body comprises plurality of body parts. Preferably, each said body part is a piece cast of metal, said metal preferably being iron.

In a preferred embodiment, the rope terminal body comprises plurality of first body parts each comprising at least one cavity for accommodating a rope end, whereby at least one rope end can be fixed with each of said first body parts. In the preferred embodiment each first body part comprises only one of said cavities.

In a preferred embodiment, the rope terminal body comprises at least one second body part, which does not comprise a cavity for accommodating a rope end. The second body part preferably forms a frame that carries the first body parts and/or a frame via which the rope terminal body B is supported on its fixing base. However, this is not necessary as such a body part can be introduced for the purposes for adding thermal mass and/or providing adjustability in the thermal mass.

In a preferred embodiment, the one or more rope ends are belt-shaped rope ends of belt shaped ropes. Preferably, each said rope is substantially larger in its width direction than in its thickness direction. Preferably, the width/thickness ratio of the rope is more than two, preferably more than 4.

In a preferred embodiment, the rope ends are ends of suspension ropes of an elevator. They can be ropes that interconnect the elevator car and counterweight for example.

In a preferred embodiment, the rope terminal body comprises plurality of cavities, namely two or more, for receiving plural rope ends, and the device comprises plurality of fixing members for fixing the plurality of rope ends immovably into the one or more cavities. The rope terminal arrangement then comprises plurality of rope ends accommodated by said plurality of cavities.

In a preferred embodiment, the rope ends are positioned in a first row and a second row, the rope ends being disposed in each row being side by side in their width direction. Preferably, the rows are straight and parallel and spaced apart in thickness direction of the ropes. Preferably, the rows are positioned alternatingly relative to each other such that the rope ends of the second row are in thickness direction of the rope ends beside the gaps existing between the neighboring rope ends of the first row.

In a preferred embodiment, the rope terminal device or a rope terminal arrangement further comprises for each rope end at least a spring arranged to tighten the rope end separately from other rope ends. The spring can act on a component that is connected with the rope end in a force transmitting manner, i.e. indirectly. Said component can be a fixing member or a housing for the fixing member or a part of the rope terminal body, for instance.

In a preferred embodiment, the rope end comprises one or more elongated load bearing members that extend parallel to the longitudinal direction of the rope unbroken throughout the length of the rope. Thus, they are able to transmit tension with good tensile stiffness. Said load bearing members can be made of non-metallic material, whereby the rope terminal device and arrangement as presented, is particularly advantageous in fixing the end of the rope. Particularly, it is preferable that said load bearing members are made of composite material comprising reinforcing fibers embedded in polymer matrix, said reinforcing fibers preferably being carbon fibers. The aforementioned load bearing members can be embedded in a coating forming the outer surface of the rope, but this is not necessary.

In a preferred embodiment, the coating is made of polymer material. Thereby it is sensitive to heat. Preferably, the polymer material is elastomer, such as polyurethane, silicon or rubber, or a material containing one or more of these.

It is also brought forward a new elevator, which comprises a rope terminal device or a rope terminal arrangement as defined anywhere above or anywhere else in the application, such as in any of the claims, fixing one or more rope ends of one or more ropes of an elevator, in particular to a fixing base. With this solution one or more of the above mentioned objects are achieved. In particular, an elevator is achieved wherein the rope ends are fixed such that they are protected from overheating in temporary high temperature conditions. Preferable further details are introduced in the following, which further details can be combined with the elevator individually or in any combination.

Preferably, said fixing base is a structure of one of the movable elevator units or a stationary structure of the building wherein the elevator is installed. Particularly, it is preferable that said fixing base is a structure of a counterweight of the elevator.

The elevator is preferably such that the car thereof is arranged to serve two or more landings. The elevator preferably controls movement of the car in response to signals from user interfaces located at landing(s) and/or inside the car so as to serve persons on the landing(s) and/or inside the elevator car. Preferably, the car has an interior space suitable for receiving a passenger or passengers, and the car can be provided with a door for forming a closed interior space.

### BRIEF DESCRIPTION OF THE DRAWINGS

In the following, the present invention will be described in more detail by way of example and with reference to the attached drawings, in which
Figure 1 illustrates a rope terminal arrangement of an elevator, comprising a rope terminal device of an elevator according to an embodiment.
Figure 2 illustrates an upper view of the rope terminal arrangement and the rope terminal device of Figure 1.
Figures 3a and3b illustrate preferred further details for the solution of Figures 1 and 2 according to a first preferred embodiment.
Figures 4a and 4b illustrate preferred further details for the solution of Figures 1 and 2 according to a second preferred embodiment.
Figures 5a and 5b illustrate preferred further details for the solution of Figures 1 and 2 according to a third preferred embodiment.
Figure 6 illustrates preferred further details for the rope terminal device and the rope terminal arrangement of an elevator.
Figure 7 illustrates a preferred cross section of the rope.
Figures 8 and 9 illustrate preferred details of the load bearing member of the rope.
Figures 10 and 11 illustrate each an elevator implementing the rope terminal device and the rope terminal arrangement of an elevator of Figure 1 and 2.
The foregoing aspects, features and advantages of the invention will be apparent from the drawings and the detailed description related thereto.

### DETAILED DESCRIPTION

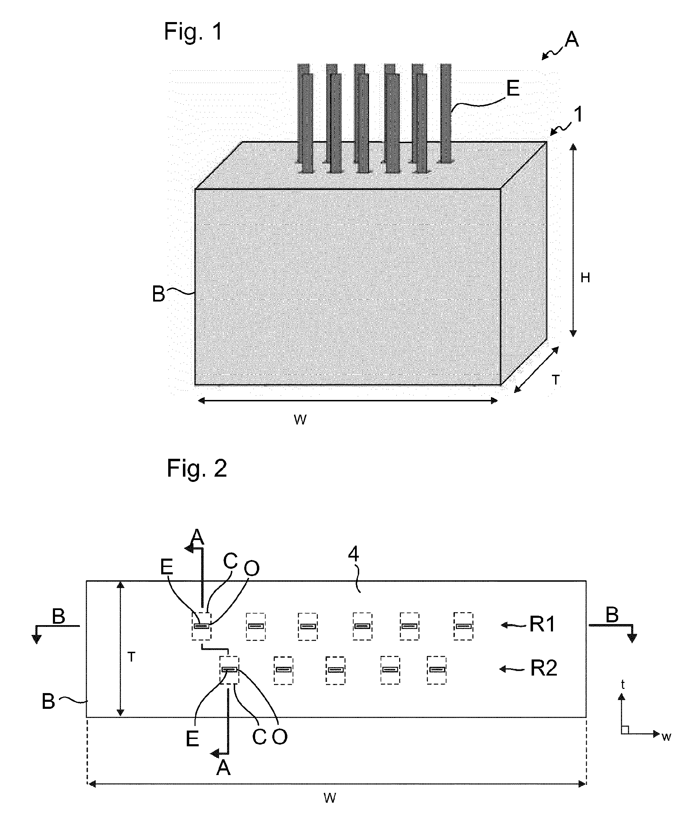

Figure 1 illustrates an embodiment of a rope terminal arrangement A of an elevator, comprising a rope terminal device 1 of an elevator. Figure 2 illustrates an upper view of the rope terminal arrangement A of Figure 1.

The rope terminal arrangement A comprises rope ends E and a rope terminal body B having inside it cavities C accommodating the rope ends E. The rope terminal body B comprises mouth openings O through which the one or more rope ends E pass into the cavities C.

The rope terminal body B is a metallic block surrounding said one or more cavities C. It weighs more than 200 kg, whereby it provides thermal mass around the one or more cavities for delaying heat transfer from the exterior to the rope ends E contained in the one or more cavities C which it surrounds. The high thermal mass of the rope terminal body B achieved with its weight disposed around the cavities C, provides it can absorb a great amount of heat that would otherwise end up rapidly to the rope ends E by convection, conduction or radiation; and thereby it can efficiently resist the rise of temperature inside the cavities C despite the temperature rise around it.

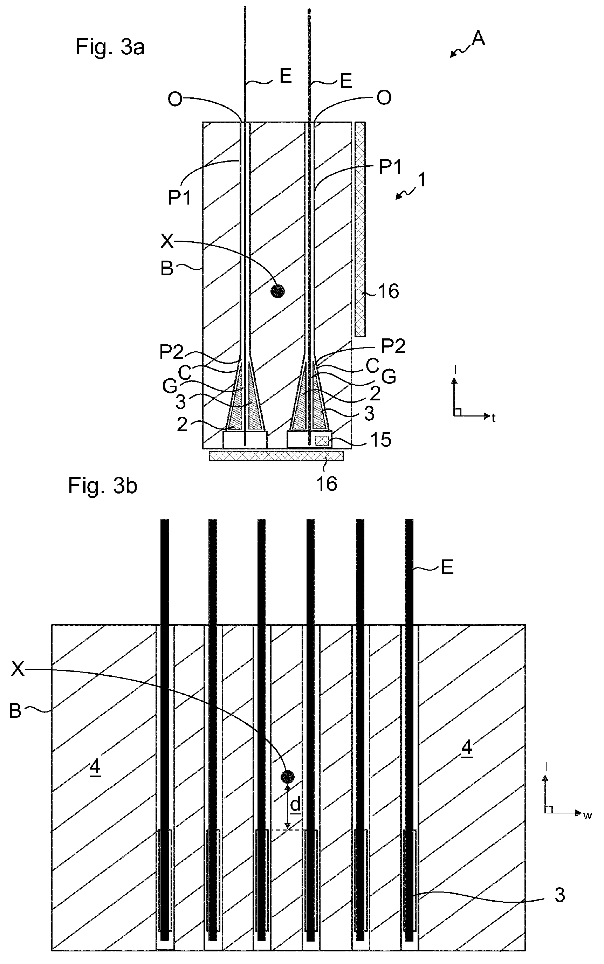

The preferred details of the cavities C are disclosed in Figures 3a, 3b, 4a, 4b, 5a, and 5b disclosing sections A-A and B-B of Figure 2.

The rope terminal arrangement A further comprises fixing members 2,3 fixing the rope ends E immovably into the one or more cavities C.

As visible in Figure 2, each said cavity C is surrounded by a metal wall 4 which is plurality of centimeters, preferably at least 5 centimeters, thick and formed by the rope terminal body B. Each said cavity C has at least said plurality of centimeters, preferably at least 5 cm, of metal material of the rope terminal body B 360 degrees around it. Thus, each said cavity C is isolated from the exterior of the rope terminal body B by a metal enclosure formed by the rope terminal body B.

In the preferred embodiment, the one or more rope ends E comprise non-metallic parts 10,11, such as non-metallic coating 11 and/or one or more non-metallic load bearing members 10. This is advantageous, as the solution is intended for protecting non-metallic, and thereby heat sensitive parts of the rope ends E from high temperatures that the rope terminal arrangement A might be subjected to in case of fire, for instance.

As presented in Figure 1, the rope terminal body B has a width W, height H and thickness T. The rope terminal body B has high density. In the preferred embodiment majority (i.e. more than 50%) of the volume of the rope terminal body B consists of metal, wherein the volume of the rope terminal body (B) is defined as width * height * thickness of the rope terminal body B. Accordingly, the rope terminal is dense. Preferably, at least 70%, more preferably at least 80 % of volume of the block consists of metal.

As presented in Figure 2, the rope terminal body B preferably comprises plurality of said cavities C for receiving plurality of rope ends E. The rope terminal arrangement A therefore comprises plurality of rope ends E and plurality of fixing members 2,3 for fixing the plurality of rope ends E immovably into the plurality of cavities C. The rope ends E are preferably distributed, as presented, in a first row R1 and a second row R2, the rope ends E being disposed in each row R1,R2 side by side in their width direction. The rows R1,R2 are straight and parallel and spaced apart in thickness direction t of the rope ends E. The rows are positioned alternatingly relative to each other such that the rope ends E of the second row R2 are in thickness direction t of the rope ends E beside the gaps existing between the neighboring ropes of the first row R1. The kind of distribution presented is advantageous for protecting the ropes efficiently from heat, but it is not necessary. The number of the ropes and cavities could also be different than what has been disclosed in the examples.

Figures 3a and 3b illustrate preferred further details for the solution of Figures 1 and 2 according to a first embodiment. In this embodiment, the block B is a one-piece structure. It is preferably cast of metal, wherein said metal is preferably iron. The rope fixing device 1 of the rope fixing arrangement A has said fixing members 2,3 disposed in the cavities C. Thus, they are protected from overheating, which is important as they form an interface via which heat might be conducted to the rope ends E. Each said cavity C is tubular, and has a tubular first portion P1, provided with a mouth opening O through which a rope end E passes into the cavity C. The tubular first portion P1 has a first cross section and a tubular second portion P2 having a second cross section. Said second portion P2 of each said cavity is larger in cross section than said first section and configured to accommodate a rope end E and the fixing members 2,3 for fixing the rope end E. Each cavity C is preferably elongated and has a longitudinal direction and the rope end E is arranged to be oriented in longitudinal direction of the cavity C when placed therein.

Said first portion P1 is preferably at least 10 cm long, more preferably at least 20 cm long. Thereby heat protection of the section of the rope end E passing towards the second portion P2 and of the components disposed in the second portion P2 is facilitated.

In the presented embodiment, there are two of said fixing members 2,3 accommodated by the second portion P2 on opposite sides of the rope end E in thickness direction t of the rope end E. Said one or more fixing members, in this case the two fixing members 2,3, are arranged to block movement of the rope end E in its longitudinal direction l relative to the rope terminal body B.

The rope fixing device 1 of the rope fixing arrangement A is in Figure 3a presented as provided with additional insulation. The additional insulation is optional. For the additional insulation purposes, the rope terminal body B contains heat insulation material filler 15 in one or more internal cavities and/or the block is at least partially covered with heat insulation material layer 16. The heat insulation material filler 15 and/or said heat insulation material layer 16 is preferably fire-proof. It can be in the form of heat insulation foam or heat insulation wool or heat reflector such as a foil, or an element comprising one or two or all of these. Said heat insulation material filler and/or said heat insulation material layer can comprise non-metallic heat insulation material, such as epoxy resin (e.g. so called super heat resistant epoxy resin) or calcium silicate base binder as main material for example. The additional heat insulation makes the solution even more effective as then the heat transfer is reduced by two differently operating ways, i.e. insulation and thermal mass. This is advantageous as these differently operating means of heat protection can complement each other. Additional heat insulation provides that the weight needed for the thermal mass can be more simply adjusted. Particularly, the weight needed for achieving a given delay in heating of the rope ends can thus be reduced. Thus, suitability of the device/arrangement for different environments as well overall variability are improved.

In the preferred embodiment illustrated in Figures 3a and 3b, said fixing members 2,3 are more particularly compression members delimiting a rope gap G narrowable by movement of the one or more fixing members 2,3 for compressing the rope end E placed in the rope gap G. Particularly, said fixing members 2,3 are wedge-shaped compression members disposed in the cavities C, in particular in the second sections P2 thereof, and configured to wedge against the rope ends E for producing compression thereon by wedging.

The cavity C itself is tapered, and thereby comprises a wedge face for each wedge shaped member.

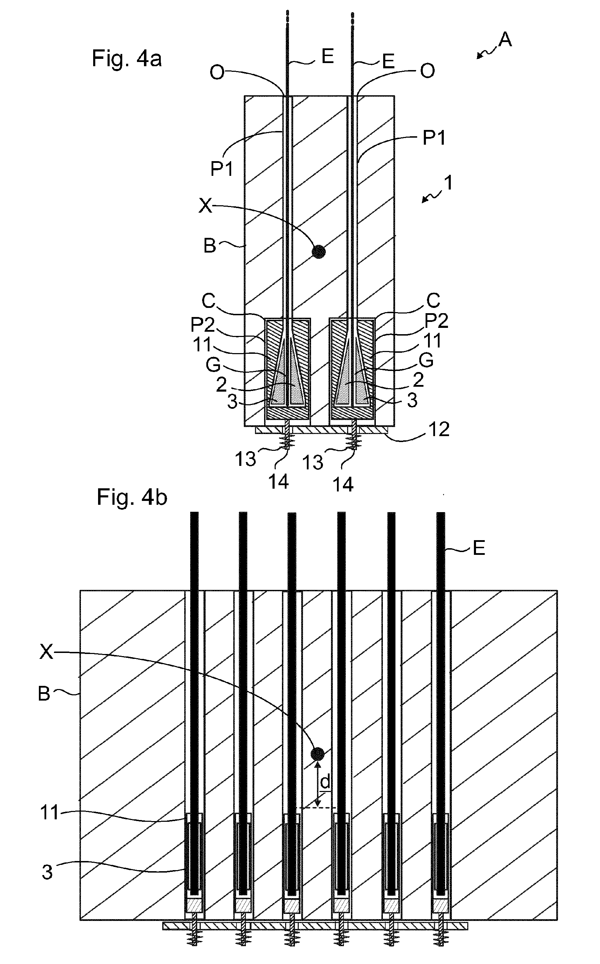

Figures 4a and 4b illustrate preferred further details for the solution of Figures 1 and 2 according to a second embodiment. In this embodiment, the block B is a one-piece structure. It is preferably cast of metal, wherein said metal is preferably iron. The rope fixing device 1 of the rope fixing arrangement A has said fixing members 2,3 disposed in the cavities C. Thus, they are protected from overheating, which is important as they form an interface via which heat might be conducted to the rope ends E. Each said cavity C is tubular, and has a tubular first portion P1, provided with a mouth opening O through which a rope end E passes into the cavity C. The tubular first portion P1 has a first cross section and a tubular second portion P2 having a second cross section. Said second portion P2 of each said cavity C is larger in cross section than said first section and configured to accommodate a rope end E and the fixing members 2,3 for fixing the rope end E. Each cavity C is preferably elongated and has a longitudinal direction and the rope end E is arranged to be oriented in longitudinal direction of the cavity C when placed therein.

Said first portion P1 is preferably at least 10 cm long, more preferably at least 20 cm long. Thereby heat protection of the section of the rope end E passing towards the second portion P2 and of the components disposed in the second portion P2 is facilitated.

In the presented embodiment, there are two of said fixing members 2,3 accommodated by the second portion P2 on opposite sides of the rope end E in thickness direction t of the rope end E. Said one or more fixing members, in this case the two fixing members 2,3, are arranged to block movement of the rope end E in its longitudinal direction l relative to the rope terminal body B.

The solution presented can optionally also be provided with the additional insulation as presented in Figure 3a.

In the preferred embodiment illustrated in Figures 4a and 4b, said fixing members 2,3 are more particularly compression members delimiting a rope gap G narrowable by movement of the one or more fixing members 2,3 for compressing the rope end E placed in the rope gap G. Particularly, said fixing members 2,3 are wedge-shaped compression members disposed in the cavities C, in particular in the second sections P2 thereof, and configured to wedge against the rope ends E for producing compression thereon by wedging.

The rope terminal device 1 of the arrangement A comprise a separate wedge housing 11 accommodated by each cavity C and comprising an tapered inside space thereby comprising a wedge face for each wedge shaped member 2,3. The wedge shaped members 2,3 are placed in the tapered inside space. The separate wedge housing 11 is particularly advantageous if it is difficult to manufacture, e.g. by casting, the body B with cavities C that are tapered.

In the preferred embodiment illustrated in Figures 4a and 4b, the rope terminal device 1 further comprises for each rope end E a spring 13 arranged to tighten the rope end E separately from other rope ends E. For this purpose, the rope terminal device 1 comprises a hitch plate 12 against which the springs 13 are mounted. In the preferred embodiment, the tightening is implemented by arranging each spring 13 to act on the wedge housing 11 accommodating the rope end E that the spring 13 in question is to tighten. To enable tightening movement, each wedge housing 11 is at least slightly movable relative to the rope terminal body B. The spring 13 can be connected with the wedge housing 11 via a connector bolt 14 fixedly connected with the wedge housing 11. The bolt 14 can extend through the spring 13, as presented, for example.

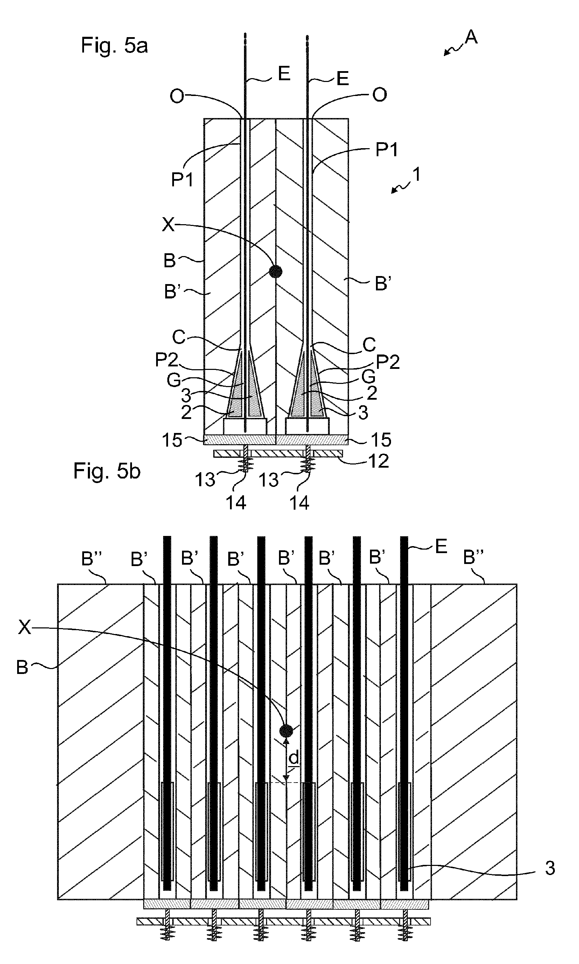

Figures 5a and 5b illustrate preferred further details for the solution of Figures 1 and 2 according to a third embodiment. In this embodiment, the rope terminal body B is a multi-piece structure having plurality of body parts B', B". Each said body part B', B" is preferably a piece cast of metal, wherein said metal is preferably iron. The rope terminal body B comprises plurality of first body part B' each comprising at least one cavity C for accommodating a rope end E, whereby at least one rope end E can be fixed with one of said first body parts B'. In the preferred embodiment illustrated each first body part B' comprises only one of said cavities C. Composing the rope terminal body B to have plurality of first body parts B' each containing a cavity C, and thereby a subset of the total number of cavities C intended for the rope terminal body, makes the manufacturing of different rope terminal bodies B simple as the number of cavities can be varied depending of the number of ropes intended for the elevator under construction by using same body part components. The rope terminal body B illustrated in Figures 5a and 5b also comprises a second body part B", which does not comprise a cavity for accommodating a rope end E.

This second body part B" can be used for alternative purposes. It is usable for adjusting the overall size and shape of the rope terminal body B. This facilitates the process of manufacturing of different rope terminal bodies 1 using same body part components, because a certain overall size and shape can be achieved for the rope terminal body B independently of the number of first body parts B'. Different second body parts B" can be manufactured suitable for being installed together with various number of first body parts B". Thus, variation can be achieved without variating the structure of the component comprising the cavity for accommodating a rope end E. It can be used as a frame via which the rope terminal body B is to be supported on its fixing base. Then, it can form a frame for carrying the first body parts B'. The rope terminal body B can, however, alternatively be provided with a frame which is a structure separate from the rope terminal body B itself via which frame the rope terminal body B is to be supported on its fixing base.

As mentioned, it is preferable that the rope fixing device 1 of the rope fixing arrangement A has said fixing members 2,3 disposed in the cavities C. Thus, they are protected from overheating as well, which is important as they form an interface via which heat might be conducted to the rope ends E. In the preferred embodiment, each said cavity C is tubular, and has a tubular first portion P1, provided with a mouth opening O through which a rope end E passes into the cavity C. The tubular first portion P1 has a first cross section and a tubular second portion P2 having a second cross section. Said second portion P2 of each said cavity C is larger in cross section than said first section and configured to accommodate a rope end E and the fixing members 2,3 for fixing the rope end E. Each cavity C is preferably elongated and has a longitudinal direction and the rope end E is arranged to be oriented in longitudinal direction of the cavity C when placed therein.

Said first portion P1 is preferably at least 10 cm long, more preferably at least 20 cm long. Thereby heat protection of the section of the rope end E passing towards the second portion P2 and of the components disposed in the second portion P2 is facilitated.

In the presented embodiment, there are two of said fixing members 2,3 accommodated by the second portion P2 on opposite sides of the rope end E in thickness direction t of the rope end E. Said one or more fixing members, i.e. in this case the two fixing members 2,3, are arranged to block movement of the rope end E in its longitudinal direction l relative to the rope terminal body B.

The solution presented can optionally also be provided with the additional insulation as presented in Figure 3a.

In the preferred embodiment illustrated in Figures 5a and 5b, said fixing members 2,3 are more particularly compression members delimiting a rope gap G narrowable by movement of the one or more fixing members 2,3 for compressing the rope end E placed in the rope gap G. Particularly, said fixing members 2,3 are wedge-shaped compression members disposed in the cavities C, in particular in the second sections P2 thereof, and configured to wedge against the rope ends E for producing compression thereon by wedging.

In the preferred embodiment illustrated each said cavity C itself is tapered, and thereby comprises a wedge face for each wedge shaped member. The wedge shaped members 2,3 are placed in the tapered inside space. It is not necessary that the cavity C has a tapered shape. Alternatively, the tapered shape could be provided with a separate wedge housing accommodated by each cavity in the same fashion as in Figures 4a and 4b, e.g. if it is difficult to cast a first body part B' with a tapered cavity C.

In the preferred embodiment illustrated in Figures 5a and 5b, the rope terminal device 1 further comprises for each rope end E a spring 13 arranged to tighten the rope end E separately from other rope ends E. For this purpose, the rope terminal device 1 comprises a hitch plate 12 against which the springs 13 are mounted. In the preferred embodiment, the tightening is implemented by arranging each spring 13 to act on the first body part B' accommodating the rope end E that the spring 13 in question is to tighten. To enable tightening movement, each first body part B' is at least slightly movable relative to other first body parts B'. The spring 13 can be connected with the first body part B' via a connector bolt 14 fixedly connected with the first body part B'. In the embodiment illustrated, the bolt 14 is connected fixedly with the first body part B' via a plate member fixed on the first body part B'. The bolt 14 can extend through the spring 13, as presented, for example.

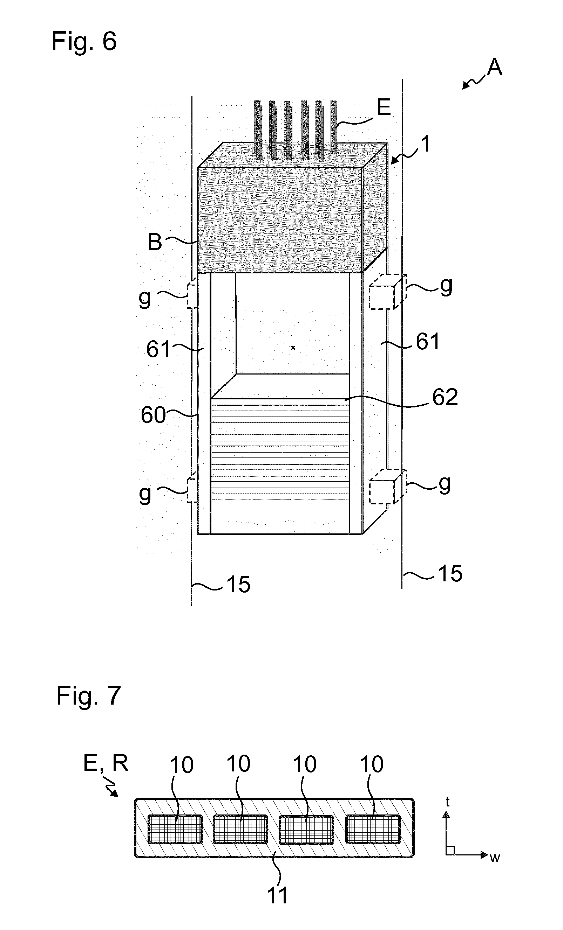

Figure 6 illustrates preferred further details for the rope terminal device 1 of an elevator and for the rope terminal arrangement A of an elevator implementing the device 1. The rope terminal body B, as well as the implementation thereof can be in line with any of the Figures 1-5.

In the preferred embodiment illustrated in Figure 6, the rope terminal body B forms part of a counterweight 60 of an elevator. This is preferable because the rope terminal body needs to have a high weight to achieve the adequate thermal mass around the one or more rope ends E. This type of rope terminal device suits well in context of the elevator unit that needs to be made high weight anyways.

In this embodiment, particularly, the rope terminal body B forms at least part of an upper cross beam of a counterweight 60. It connects two vertical beams 61 of the counterweight 60. Thus, the weight distribution and balance of the counterweight is advantageous such that the rope ends E can suspend the counterweight 60. The counterweight 60 has been mounted to travel along guide rails 15 guided by guide members g mounted on the counterweight 60. Each said guide member may be any guide member suitable for leaning in horizontal direction against a vertical guide rail and to travel along it. The guide members are preferably either in the form of roller guides or slider guides. Preferably, there are at least one guide member g mounted on a first vertical beam 61 of the counterweight and a at least one second guide member mounted on a second vertical beam 61 of the counterweight 60. The counterweight 60 preferably further comprises weights 62 mounted between the vertical beams 61.

In general, the effect of the thermal mass is increased the more it weighs. Therefore, it is preferable that the rope terminal body B) weighs even more than said 200 kg, preferably more than 500 kg, whereby a substantial delaying effect in heating of rope ends E is achieved in most solutions. More preferably the rope terminal body B weighs more than 1000 kg whereby delaying effect in heating of rope ends E is a substantial enough to provide more than 1 hour use for the elevator in most elevator solutions. Although high weight is advantageous in terms of delaying heat transfer to the rope ends E, when used to form part of the counterweight it is preferable that the rope terminal body B weighs less than 3000 kg so that the elevator balance can be simply maintained such that the elevator is still reasonably economical to use.

In general, it is preferable that the rope terminal body (B) weighs more if the number of the rope ends it accommodates is high, because the rope ends E need to be spaced apart. For this reason, it is preferable that that the rope terminal body B weighs more than 50 kg per each rope end E it is arranged to accommodate.

It is preferable that the rope terminal body B has a width, height and thickness, none of which is very small so that it is not likely to have a very short heat bridges in any direction. Thickness also facilitates evening out of the heat distribution. Preferably, the rope terminal body B has a width, height and thickness each being preferably at least 20 cm. However, these are only lower limits preferred to prune the device of vulnerabilities, and it is preferable that the rope terminal body B is even larger than this. In general, keeping the overall surface area small is advantageous for maintaining heat transfer low. Thus, it is advantageous that any of said width, height and thickness is not very small so as to avoid increasing the overall surface area. In one example, the width is 125 cm, height 80 cm and thickness 25 cm, which will result in weight 1950 kg when substantially whole volume of the rope terminal body B consists of metal. It has been determined by calculation that these dimensions together with the construction of Figures 1-5 results in more than 1.7 hours time in 400 degrees (centigrade) before the block temperature reaches a temperature 150 degrees (centigrade) which is roughly the melting point of thermoplastic polyurethane.

The material of the rope terminal body that is a block is preferably distributed such that the centre of gravity X of the rope terminal body B is at a distance d less than 50 cm from the closest contact point between the one or more fixing members 2,3 and the rope end E as measured in longitudinal direction of the rope end E. Thus, heat transfer to the contact area between the one or more fixing members 2,3 and the rope end E is efficiently delayed. Preferably, the centre of gravity X of the rope terminal body B is at the point which is between the end face (the face facing in longitudinal direction of the rope, downwards in Figures 3-5) of a rope end E placed in the cavity C and the one or more mouth openings O as measured in longitudinal direction of the rope end E.

The ropes are preferably suspension ropes of the elevator, particularly suspension ropes for directly suspending the elevator car and/or the counterweight of the elevator. In this context, reliability of the rope terminal in high temperature situations is critical in terms of safety of the users of the elevator as well as users of the building where it is installed.

Figure 7 illustrates a preferred structure of the rope R as well as the rope end E. The rope R comprises one or more elongated load bearing members 10, that extend parallel to the longitudinal direction l of the rope R unbroken throughout the length of the rope R.

In the illustrated embodiment, the load bearing members 10 are embedded in a coating 11 forming the outer surface of the rope R. The coating 11 is preferably made of non-metallic material, such as polymer material. The non-metallic material of the coating 11, particularly presence of polymer, increases its sensitivity to high temperature. For this reason, a rope terminal device, as presented, is particularly advantageous in fixing the end E of the rope R.

With the coating 11, the rope R is provided with a surface via which the rope R can effectively engage frictionally with a drive wheel of an elevator, for instance. Also, hereby the friction properties and/or other surface properties of the rope are adjustable, independently of the load bearing function, such that the rope perform wells in the intended use, for instance in terms of traction for transmitting force in longitudinal direction of the rope so as to move the rope with a drive wheel. Furthermore, the load bearing members 10 embedded therein are thus provided with protection. The coating 11 is preferably elastic. Elastic polymer material, for example polyurethane provides the rope R the desired frictional properties simply, good wear resistance as well as efficient protection for the load bearing members 10. Polyurethane is in general well suitable for elevator use, but also materials such as rubber or silicon or equivalent elastic materials are suitable for the material of the coating 11.

Said one or more load bearing members 10 are preferably, but not necessarily, made of non-metallic material. The non-metallic material is preferably composite material comprising reinforcing fibers embedded in polymer matrix, said reinforcing fibers preferably being carbon fibers. With this kind of structure, the rope R has especially advantageous properties in elevator use, such as light weight and good tensile stiffness in longitudinal direction. The non-metallic material, particularly presence of polymer, increases its sensitivity to high temperature. For this reason, the rope terminal device 1 as presented, is particularly advantageous in fixing the end of the rope R when load bearing members 10 are made of non-metallic material. The structure of the rope is preferably more specifically as described in document WO2009090299A1.

The rope R is preferably belt-shaped. It is preferably substantially larger in its width direction w than in its thickness direction t. Belt-shaped ropes typically require use of non-metallic materials, most often at least in the parts forming the surface of the rope. For this reason, a rope terminal device 1, as presented, is particularly advantageous in fixing the ends E of belt-shaped ropes R. The presented rope R has two opposite planar sides S1,S2 facing in thickness direction t of the rope R. The planar sides are here flat but could alternatively be provided with an uneven surface pattern such as polyvee or tooth -pattern. The planar sides provide that the rope R can be fixed firmly with compression also without bending it. Bending would be disadvantageous if the rope has rigid and/or brittle elements, such as those made of carbon fiber composite. It is not necessary, but it is preferable, that the width/thickness ratio of the rope R is high, preferably at least 2 more preferably at least 4, or even more. In this way a large gripping area as well as a large cross-sectional area for the rope R is achieved. The bending capacity around the width-directional axis is also favorable with rigid materials of the load bearing member, such as composite material. Owing to the wide shape, the rope R suits very well to be used in hoisting appliances, in particular in elevators, wherein the rope R needs to be guided around rope wheels.

In the embodiment illustrated in Figure 7, the rope R comprises plurality of the load bearing members 10, which are adjacent each other in width direction w of the rope R. In the present case, there are particularly four of said load bearing members 2 embedded adjacently in said coating 11, but the rope R could alternatively have any other number of load bearing members 10. For instance, the rope R could be made to have only one load bearing member 10 (with or without a coating) or have plurality of load bearing members 10 stacked in thickness direction t, for instance.

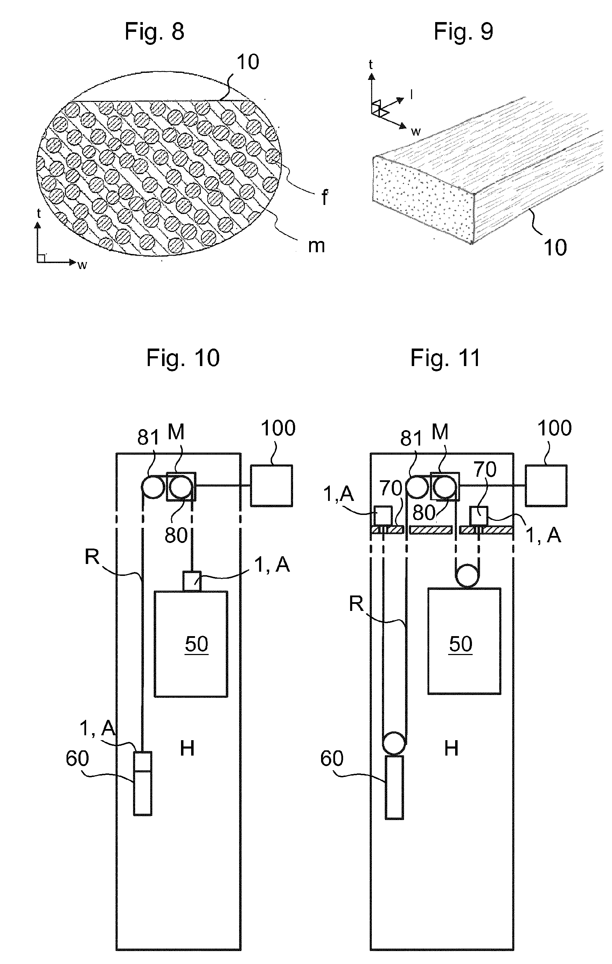

Figure 8 illustrates a preferred inner structure for the aforementioned load bearing member 10, showing inside the circle an enlarged view of the cross section of the load bearing member 10 close to the surface thereof, as viewed in the longitudinal direction l of the load bearing member 10. The parts of the load bearing member 10 not showed in Figure 8 have a similar structure. Figure 9 illustrates the load bearing member 10 three dimensionally. The load bearing member 10 is made of composite material comprising reinforcing fibers f embedded in polymer matrix m. The reinforcing fibers f are more specifically distributed at least substantially evenly in polymer matrix m and bound to each other by the polymer matrix m. This has been done e.g. in the manufacturing phase by immersing them together in the fluid material of the polymer matrix which is thereafter solidified. The load bearing member 10 formed is a solid elongated rod-like one-piece structure. Said reinforcing fibers f are most preferably carbon fibers, but alternatively they can be glass fibers, or possibly some other fibers. Preferably, the reinforcing fibers f of each load bearing member 10 are parallel with the longitudinal direction of the load bearing member 10. Thereby, the fibers f are also parallel with the longitudinal direction of the rope R as each load bearing member 2 is oriented parallel with the longitudinal direction of the rope R. This is advantageous for the rigidity as well as behavior in bending. Owing to the parallel structure, the fibers in the rope R will be aligned with the force when the rope R is pulled, which ensures that the structure provides high tensile stiffness. The fibers f used in the preferred embodiments are accordingly substantially untwisted in relation to each other, which provides them said orientation parallel with the longitudinal direction of the rope R. All the reinforcing fibers f are preferably distributed in the aforementioned load bearing member 2 at least substantially evenly. The fibers f are then arranged so that the load bearing member 10 would be as homogeneous as possible in the transverse direction thereof. The composite matrix m, into which the individual fibers f are distributed, is most preferably made of epoxy, which has good adhesiveness to the reinforcement fibers f and which is known to behave advantageously with reinforcing fibers such as carbon fiber particularly. Alternatively, e.g. polyester or vinyl ester can be used, but any other suitable alternative materials can be used. The polymer matrix m is preferably of a hard non-elastomer, such as said epoxy, as in this case a risk of buckling can be reduced for instance. However, the polymer matrix need not be non-elastomer necessarily, e.g. if the downsides of this kind of material are deemed acceptable or irrelevant for the intended use. In that case, the polymer matrix m can be made of elastomer material such as polyurethane or rubber for instance.

Figures 10 and 11 illustrate preferred embodiments of the elevator utilizing the rope terminal device 1 and the rope terminal arrangement A described above. The elevator comprises a hoistway H and elevator units 50,60 vertically movable in the hoistway H. The elevator units 50,60 include in this case an elevator car 50 and a counterweight 60. In both embodiments, the elevator further comprises one or more ropes R, each being connected with said elevator units 50, 60 and having two rope ends E, each end being fixed to a fixing base 50,60,70 with a rope terminal device 1 of a rope terminal arrangement A as described elsewhere in the application. Each said rope R suspends the elevator units 50,60 whereto it is connected. Accordingly, the rope R is in this case a suspension rope R of the elevator. The illustrated elevators differ from each other in terms of their suspension ratios, i.e. how the ropes R have been connected with the elevator units 50,60. In the embodiment of Figure 10, the fixing base is for one end of the rope R the elevator unit 50, and for the other end the elevator unit 60. In the embodiment of Figure 11, on the other hand, the fixing base is for both ends of the rope R a stationary structure 70 of the building wherein the elevator is installed.

The elevators illustrated in Figures 10 and 11 are more specifically such that each of them comprises one or more upper rope wheels 80,81 mounted higher than the car 50 and the counterweight 60, in this case particularly in proximity of the upper end of the hoistway H. In this case there are two of said rope wheels 80,81 but the elevator could be implemented also with some other number of rope wheels. Each of said one or more ropes R pass around said one or more rope wheels 80,81 mounted in proximity of the upper end of the hoistway H. In this case the one or more rope wheels 80,81 are mounted inside the upper end of the hoistway H, but alternatively they could be mounted inside a space beside or above the upper end of the hoistway H. Said one or more rope wheels 80,81 comprise a drive wheel 80 engaging said one or more hoisting ropes R , and the elevator comprises a motor M for rotating the drive wheel 80. The elevator car 50 can be moved by rotating the drive wheel 80 engaging each of said ropes R. The elevator further comprises an elevator control unit 100 for automatically controlling rotation of the motor M, whereby the movement of the car 50 is also made automatically controllable.

In the preferred embodiments, an advantageous structure for the rope has been disclosed. However, the invention can be utilized with also other kind of heat sensitive ropes such as with other kinds of belt-shaped ropes having different materials. Also, the ropes could be shaped otherwise than disclosed, such as to have a round in cross section instead of belt-shape, for example.

In the preferred embodiments illustrated, there are two wedge shaped fixing members 2,3 accommodated in each cavity C on opposite sides of the rope end E. However, using two wedge shaped fixing members configured to receive the rope end E between them is, however, not necessary as the solution could alternatively have a wedge fixing member on only one side of the rope end E. In this case, a wall of the frame body B could be adapted to give reaction force for achieving proper compression, for instance. The fixing of the rope ends E into the cavity can be realized also in alternative ways.

In the preferred embodiments, each said rope being fixed is a suspension rope of the elevator. However, the rope terminal device 1 / rope terminal arrangement A is also usable for fixing of ends of some other ropes, such as compensation ropes.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A rope terminal device (1) for fixing one or more rope ends (E) of one or more ropes (R) of an elevator, comprising
a rope terminal body (B) having inside it one or more cavities (C) for accommodating one or more rope ends (E); and
one or more fixing members (2,3) for fixing the one or more rope ends (E) immovably into the one or more cavities (C);
wherein the rope terminal body (B) is a metallic block surrounding said one or more cavities (C), and weighs more than 200 kg, the rope terminal body (B) providing thermal mass around the one or more cavities (C) for delaying heat transfer from the exterior to the rope ends (E) contained in the one or more cavities (C).

2. A rope terminal arrangement (A) of an elevator, comprising
one or more rope ends (E); and
a rope terminal body (B) having inside it one or more cavities (C) accommodating said one or more rope ends (E); and
one or more fixing members (2,3) fixing said one or more rope ends (E) immovably into the one or more cavities (C);
wherein the rope terminal body (B) is a metallic block surrounding said one or more cavities (C), and weighs more than 200 kg, the rope terminal body (B) providing thermal mass around the one or more cavities (C) for delaying heat transfer from the exterior to the rope ends (E) contained in the one or more cavities (C).

3. A rope terminal device (1) or a rope terminal arrangement (A) of an elevator according to any of the preceding claims, **wherein** each said cavity (C) is surrounded by a metal wall (4) which is plurality of centimeters, preferably at least 5 centimeters, thick and formed by the rope terminal body (B).

4. A rope terminal device (1) or a rope terminal arrangement (A) according to any of the preceding claims, **wherein** each said cavity (C) has at least said plurality of centimeters, preferably at least 5 cm, of metal material of the rope terminal body (B) 360 degrees around it.

5. A rope terminal device (1) or a rope terminal arrangement (A) according to any of the preceding claims, **wherein** majority of the volume of the rope terminal body (B) consists of metal, wherein the volume of the rope terminal body (B) is defined as width * height * thickness of the rope terminal body (B).

6. A rope terminal device (1) or a rope terminal arrangement (A) according to any of the preceding claims, **wherein** the one or more rope ends (E) comprise non-metallic parts (10,11), such as non-metallic coating (11) and/or one or more non-metallic load bearing members (10).

7. A rope terminal device (1) or a rope terminal arrangement (A) according to any of the preceding claims, **wherein** the rope terminal body (B) forms part of a counterweight (60) of an elevator.

8. A rope terminal device (1) or a rope terminal arrangement (A) according to any of the preceding claims, **wherein** the rope terminal body (B) weighs more than 50 kg per each rope end (E) it is arranged to accommodate.

9. A rope terminal device (1) or a rope terminal arrangement (A) according to any of the preceding claims, **wherein** the rope terminal body (B) weighs more than 500 kg, more preferably more than 1000 kg.

10. A rope terminal device (1) or a rope terminal arrangement (A) of an elevator according to any of the preceding claims, **wherein** each said cavity has a tubular first portion (P1) and a tubular second portion (P2) said second portion (P2) being larger in cross section than said first section (P1) and configured to accommodate a rope end (E) and one or more fixing members (2,3).

11. A rope terminal device (1) or a rope terminal arrangement (A) of an elevator according to any of the preceding claims, **wherein** the centre of gravity (X) of the rope terminal body (B) is at a distance (d) less than 50 cm from the closest contact point between the one or more fixing members (2,3) and the rope end (E) as measured in longitudinal direction of the rope end (E).

12. A rope terminal device (1) or a rope terminal arrangement (A) of an elevator according to any of the preceding claims, **wherein** majority of the weight of the rope terminal body (B) is formed by metal, preferably cast metal, said cast metal preferably being cast iron.

13. A rope terminal device (1) or a rope terminal arrangement (A) of an elevator according to any of the preceding claims, **wherein** said one or more fixing members (2,3) are disposed in the one or more cavities (C).

14. A rope terminal device (1) or a rope terminal arrangement (A) according to any of the preceding claims, **wherein** said one or more fixing members (2,3) are compression members delimiting a rope gap (G) narrowable by movement of the one or more fixing members (2,3) for compressing the rope end (E) placed in the rope gap (G), said one or more fixing members (2,3) preferably being wedge-shaped compression members disposed in the one or more cavities (C) and configured to wedge therein against the one or more rope ends (E) for producing compression thereon by wedging.

15. A rope terminal device (1) or a rope terminal arrangement (A) according to any of the preceding claims, **wherein** the rope terminal body (B) comprises plurality of body parts (B', B"), said plurality of body parts (B', B") comprising plurality of first body parts (B') each comprising at least one cavity (C) for accommodating a rope end (E), whereby at least one rope end (E) can be fixed with each of said first body parts (B').

16. A rope terminal device (1) or a rope terminal arrangement (A) according to any of the preceding claims, **wherein** the rope terminal body (B) comprises plurality of cavities (C) for receiving plurality of rope ends (E), and the device (1) comprises plurality of fixing members (2,3) for fixing the plurality of rope ends (E) immovably into the one or more cavities (C), and the rope terminal arrangement (A) comprise plurality of rope ends (E).

17. A rope terminal device (1) or a rope terminal arrangement (A) of an elevator according to any of the preceding claims, **wherein** each said rope end (E) comprises one or more elongated load bearing members (10) that extend parallel to the longitudinal direction of the rope (R) unbroken throughout the length of the rope (R), said load bearing members (10) being made of non-metallic material, preferably of composite material comprising reinforcing fibers (f) embedded in polymer matrix (m), said reinforcing fibers (f) preferably being carbon fibers.

18. An elevator, which comprises a rope terminal device (1) or a rope terminal arrangement (A) as defined in any of the preceding claims 4-14 fixing one or more rope ends (E) of one or more ropes (R) of an elevator.
